# EUROPÄISCHE PATENTSCHRIFT

(11) **EP 3 556 639 B1**
(45) Veröffentlichungstag und Bekanntmachung des Hinweises auf die Patenterteilung: **26.08.2020**
(21) Anmeldenummer: 19163819.6
(22) Anmeldetag: 19.03.2019
(51) Int. Cl.: B62D 5/04, B60W 30/09, B62D 15/02

(54) **AUFSCHALTEN EINES STÖRSIGNALS ZU FÜHRUNGSGRÖSSEN BEI KASKADENREGELUNG**
SWITCHING OF AN INTERFERENCE SIGNAL FOR MANAGEMENT VARIABLES IN CASCADE CONTROL
PRODUCTION D'UN SIGNAL PERTURBATEUR DE GRANDEURS DE RÉFÉRENCE POUR UNE COMMANDE EN CASCADE

(30) Priorität: 20.04.2018 DE 102018206089
(43) Veröffentlichungstag der Anmeldung: 23.10.2019
(73) Patentinhaber: ZF Friedrichshafen AG, 88046 Friedrichshafen (DE)
(72) Erfinder: Münch, Eckehard, 32257 Bünde (DE)
(74) Vertreter: ZF Friedrichshafen AG

(56) Entgegenhaltungen:
- EP-A2- 2 949 546
- DE-A1-102014 220 865
- US-A1- 2016 280 265

## Beschreibung

Die Erfindung bezieht sich auf eine Auswerteeinrichtung für eine Ineinanderschaltung wenigstens eines ersten Regelkreises und eines zweiten Regelkreises zum Aufschalten eines Störsignals nach Anspruch 1. Ferner bezieht sich die Erfindung auf eine Ineinanderschaltung von mehreren Regelkreisen zum Aufschalten eines Störsignals nach Anspruch 5. Außerdem bezieht sich die Erfindung auf ein Lenkregelungssystem für ein Fahrzeug nach Anspruch 8. Des Weiteren bezieht sich die Erfindung auf ein automatisiert betreibbares Fahrzeug nach Anspruch 11. Die Erfindung bezieht sich auch auf ein Verfahren zur Berücksichtigung von Fahrereingriffen bei einer Regelung einer Bewegung eines Fahrzeuges nach Anspruch 12 und ein Computerprogrammprodukt zur Ausführung des erfindungsgemäßen Verfahrens nach Anspruch 15.

Fortgeschrittene Fahrerassistenzsysteme, im Englischen als advanced driver assistance systems, abgekürzt ADAS, bezeichnet, führen unter anderem ein Fahrzeug in Längs- und/oder Querrichtung. Zum Beispiel regelt ein Abstandsregeltempomat , im Englischen als adaptive cruise control, abgekürzt ACC, bezeichnet, den Abstand eines Fahrzeuges zu einem vorausfahrenden Fahrzeug in Abhängigkeit der Geschwindigkeit. Ein Spurhalteassistent, im Englischen als lane keeping assist, abgekürzt LKA, bezeichnet, beispielsweise warnt den Fahrer eines Fahrzeuges vor dem Verlassen einer Fahrspur. Trajektorienregelungssysteme führen ein Fahrzeug automatisiert, das heißt Fahrereingriffe, beispielsweise in Form von über ein Lenkrad manuell aufgebrachtes Handlenkmoment, sind nicht vorgesehen.

Im Zusammenhang mit der Querführung werden über einen Aktuator an der Lenksäule Momente eingeprägt, zum Beispiel über einen Elektromotor. Diese Momente führen zu einer Drehung der Lenksäule. Die Lenksäule steht in Wirkverbindung mit gelenkten Rädern, beispielsweise mit den Vorderrädern und/oder Hinterrädern. Zum Beispiel ist die Lenksäule über eine mechanische Kopplung mit einer Zahnstange gekoppelt. Die Zahnstange ist mit den gelenkten Rädern gekoppelt. Damit resultieren die Momente in einer Drehung der gelenkten Räder. Durch die Drehung der Räder wird die Fahrtrichtung des Fahrzeugs beeinflusst.

Die notwendigen Lenkmomente werden in einem Lenkregelungssystem oder in einem ADAS innerhalb eines ersten Regelkreises durch einen Lenkwinkelregler geregelt. Die zu stellenden Lenkwinkel werden zum Beispiel im Falle einer Trajektorienregelung innerhalb eines zweiten, dem ersten Regelkreis überlagerten Regelkreis durch einen Trajektorienregler geregelt.

Eine Schwierigkeit stellt die Berücksichtigung von Fahrereingriffen während diesen Regelungsaufgaben dar. Aufgrund der starren Lenksäule greift der Fahrer direkt über ein Handlenkmoment auf die Lenksäule ein und beeinflusst so die Drehung der Räder.

Ein Fahrereingriff weist regelungstechnisch die Merkmale einer Störung auf. Die überlagerten Regler versuchen, diese Störung auszuregeln, das heißt zu kompensieren. Die Regelung hat die Aufgabe, trotz störender Einflüsse den Wert der Regelgröße an den durch ein Führungssignal vorgegebenen Wert anzugleichen. Zum Beispiel resultiert der Fahrereingriff in einer Differenz zwischen Ist-Lenkwinkel und Soll-Lenkwinkel. Der Lenkwinkelregler wird sein Ausgangssignal derart bestimmen, dass diese Regeldifferenz minimiert wird. Dann wirkt der Lenkwinkelregler aber einem durch den Fahrereingriff ausgedrückten Fahrerwunsch entgegen. Tatsächlich ist der Fahrereingriff jedoch nicht als Störung, sondern als ein Führungssignal anzusehen. Der Fahrerwunsch soll also nicht kompensiert, sondern zugelassen werden.

Herkömmliche Lenkregelungssysteme arbeiten in einem automatisierten Fahrbetrieb, das heißt ohne Fahrereingriffe, im Englischen als hands-off bezeichnet, mit einer höheren Regelkreisverstärkung im Lenkwinkelregler. Bei Detektion eines Fahrereingriffs wird die Regekreisverstärkung sofort reduziert. Dadurch wird zwar der Fahrerwunsch ermöglicht. Jedoch wird gleichzeitig die Regelperformanz begrenzt. Diese Regler werden ohne integrierenden Anteil, abgekürzt I-Anteil, realisiert. Regler mit I-Anteil sind nämlich stationär genaue Regler, die einem Fahrereingriff mit der Zeit immer stärker entgegen arbeiten. Ferner wird eine Gierratenregelung nicht, oder nur mit geringer Verstärkung und ohne I-Anteil, eingesetzt.

Außerdem ist bekannt, für einen Regler eines Regelkreises einen resultierenden Sollwert zur Regelung einer Lenkeinrichtung zu bestimmen, wobei der resultierende Sollwert einen Fahrereingriff umfasst. Stand der Technik ist beispielsweise in der DE 10 2014 226 781 A1 offenbart. Der nächstliegende Stand der Technik ist in der EP 2 949 546 A2 zu sehen.

Problematisch ist aber eine Berücksichtigung von Fahrereingriffen in Regelkreisen einer Regelungskaskade. Bei kaskadierten Regelungsstrukturen müssen nämlich die inneren Regelkreise schneller arbeiten als die äußeren Regelkreise. Aufgrund der geringen Performanz des innersten Regelkreises, der zum Beispiel einen Lenkwinkelregler umfasst, haben weitere Kaskaden, zum Beispiel unterlagerter Regelkreise mit Lenkgeschwindigkeitsregler oder überlagerter Regelkreise mit Gierratenregler, nur eingeschränkten Nutzen.

Hier setzt die Erfindung an. Der Erfindung hat die Aufgabe zugrunde gelegen, einen Fahrerwunsch auch in ausgeprägten kaskadierten Regelungsstrukturen und bei Vorhandensein von integrierenden Regelungsanteilen zu berücksichtigen.

Die Aufgabe wird gelöst durch eine Auswerteeinrichtung für eine Ineinanderschaltung wenigstens eines ersten Regelkreises und eines zweiten Regelkreises zum Aufschalten eines Störsignals mit den Merkmalen des Anspruchs 1. Ferner wird die Aufgabe gelöst durch eine Ineinanderschaltung von mehreren Regelkreisen zum Aufschalten eines Störsignals mit den Merkmalen des Anspruchs 5. Außerdem wird die Aufgabe gelöst durch ein Lenkregelungssystem für ein Fahrzeug mit den Merkmalen des Anspruchs 8. Des Weiteren wird die Aufgabe gelöst durch ein automatisiert betreibbares Fahrzeug mit den Merkmalen des Anspruchs 11. Die Aufgabe wird auch gelöst durch ein Verfahren zur Berücksichtigung von Fahrereingriffen bei einer Regelung einer Bewegung eines Fahrzeuges mit den Merkmalen des Anspruchs 12 und durch ein Computerprogrammprodukt zur Ausführung des erfindungsgemäßen Verfahrens mit den Merkmalen des Anspruchs 15.

Weiterbildungen und vorteilhafte Ausgestaltungen sind in den Unteransprüchen angegeben.

Die erfindungsgemäße Auswerteeinrichtung ist für eine Ineinanderschaltung wenigstens eines ersten Regelkreises und eines zweiten Regelkreises zum Aufschalten eines Störsignals vorgesehen. Die Ineinanderschaltung umfasst wenigstens einen ersten Regler. Der erste Regler regelt eine erste Regelgröße in Abhängigkeit eines ersten Führungssignals innerhalb des ersten Regelkreises. Ferner umfasst die Ineinanderschaltung wenigstens einen zweiten Regler. Der zweite Regler regelt eine zweite Regelgröße in Abhängigkeit eines zweiten Führungssignals innerhalb des zweiten Regelkreises. Das erste Führungssignal des ersten Reglers umfasst ein zweites Ausgangssignal des zweiten Reglers. Die Auswerteeinrichtung umfasst eine Eingangsschnittstelle. Über die Eingangsschnittstelle wird das Störsignal erhalten. Die Auswerteeinrichtung ist ausgeführt, in Abhängigkeit des Störsignals wenigstens ein erstes Modellführungssignal für den ersten Regler zu bestimmen. Außerdem ist die Auswerteeinrichtung ausgeführt, ein zweites Modellführungssignal für den zweiten Regler zu bestimmen. Des Weiteren umfasst die Auswerteeinrichtung wenigstens eine Ausgangsschnittstelle. Mit der Ausgangsschnittstelle wird das erste Modellführungssignal dem ersten Führungssignal und das zweite Modellführungssignal dem zweiten Führungssignal aufgeschaltet. Das aus dieser Aufschaltung resultierende erste Führungssignal umfasst damit einen Anteil des Störsignals. Das aus dieser Aufschaltung resultierende zweite Führungssignal umfasst auch einen Anteil des Störsignals. Damit wird das Störsignal als ein Führungssignal bei einer Regelung eines technischen Prozesses berücksichtigt.

Regelung ist ein Vorgang, bei dem eine zu regelnde Größe, die sogenannte Regelgröße, auch als Ist-Wert bezeichnet, fortlaufend erfasst wird. Bei dieser Erfassung wird die Regelgröße ständig mit einem Führungssignal, auch Führungsgröße und/oder Soll-Wert bezeichnet, verglichen. Das Führungssignal ist eine von der betreffenden Regelung unmittelbar nicht beeinflusste Größe, die dem Regelkreis von außen zugeführt wird und dem ein Ausgangssignal der Regelung in vorgegebener Abhängigkeit folgen soll. Bedingt durch Störsignale, auch Störgrößen genannt, weicht der Ist-Wert von dem Soll-Wert ab. Störsignale umfassen alle von außen wirkenden Größen, soweit sie die beabsichtigte Beeinflussung in einer Regelung beeinträchtigen. Abhängig vom Ergebnis dieses Vergleichs wird die Regelgröße im Sinne einer Angleichung an das Führungssignal beeinflusst. Der sich ergebende Wirkungsablauf findet in einem Kreis, dem sogenannten Regelkreis, statt. Die Regelgröße wirkt in der Kreisstruktur im Sinne einer Gegenkopplung auf sich selbst zurück.

Ein Regler ist ein Übertragungsglied einer Regeleinrichtung. Das Übertragungsglied führt eine Abbildungsvorschrift aus. Die Abbildungsvorschrift, auch Übertragungsfunktion genannt, ordnet jedem für das entsprechende Übertragungsglied zulässigen Eingangssignal ein Ausgangssignal zu. Das Eingangssignal des Reglers ist die Differenz zwischen Soll-Wert und Ist-Wert, auch Regelabweichung genannt. Die Regelabweichung kann zeitlich konstant oder variierend sein. Das Ausgangssignal ist ein Stellsignal, auch als Stellgröße bezeichnet. Das Stellsignal ist die Eingangsgröße einer Regelstrecke. Die Regelstrecke ist derjenige Teil des Regelkreises, welcher den aufgabengemäß zu beeinflussenden Bereich einer Anlage darstellt. Ausgangsgröße der Regelstrecke ist die Regelgröße, die als Ist-Wert wieder als Eingangssignal für den Regler rückgeführt wird. Regler beeinflussen in technischen Prozessen physikalische Größen, zum Beispiel Temperatur und/oder Stromstärke. Übertragungsglieder umfassen ein P-Glied, das ist ein proportional wirkendes Übertragungsglied, ein I-Glied, das ist ein integrierend wirkendes Übertragungsglied, ein D-Glied, das ist ein differenzierend wirkendes Übertragungsglied, und ein P-T-Glied, das ist ein Verzögerungsglied. Aus entsprechenden Reihen-und/oder Parallelschaltungen dieser Übertragungsglieder gehen Regler mit P-, I-, D-, PI-, PP-, PD-, PID- und PDD-Anteil hervor. Regler werden mit Schaltungen von Dioden, Kondensatoren und Mikrokontrollern realisiert.

Die Ineinanderschaltung von Reglern wird auch Kaskadierung von Reglern genannt oder als Kaskadenregelung bezeichnet.

Eine Auswerteeinrichtung ist eine Vorrichtung, die eingehende Informationen verarbeitet und ein aus dieser Verarbeitung resultierendes Ergebnis ausgibt. Insbesondere ist eine elektronische Schaltung, wie zum Beispiel eine zentrale Prozessoreinheit oder ein Grafikprozessor, eine Auswerteinrichtung.

Eine Schnittstelle ist eine Einrichtung zwischen wenigstens zwei Funktionseinheiten, an der ein Austausch von logischen Größen, zum Beispiel Daten, oder physikalischen Größen, zum Beispiel elektrischen Signalen, erfolgt, entweder nur unidirektional oder bidirektional. Der Austausch kann analog oder digital erfolgen. Der Austausch kann ferner drahtgebunden oder drahtlos erfolgen.

Ein Modellführungssignal ist ein Führungssignal, das in Abhängigkeit eines Modells, das heißt einer Abbildungsvorschrift oder Übertragungsfunktion, bestimmt wird. Die Abbildungsvorschrift oder die Übertragungsfunktion bestimmt aus einer Eingangsgröße ein Modellführungssignal. Das Modell beschreibt, wie sich ein Soll-Wert in Abhängigkeit eines Störsignals verändert.

Die erfindungsgemäße Auswerteeinrichtung arbeitet unabhängig von den eingesetzten Reglern, insbesondere auch bei hohen Regelkreisverstärkungen sowie stationär genauen Reglern. Bei einem stationär genauen Regler strebt die Regeldifferenz bei stationären, im Sinne von konstanten, Eingangsgrößen mit der Zeit gegen Null. Die Eingangsgrößen umfassen hier Führungssignale und Störsignale. Das technische Problem, bei einer Kaskadenregelung eines technischen Prozesses ein Störsignal als ein Führungssignal in der Regelung zu berücksichtigen, wird damit durch die erfindungsgemäße Auswerteeinrichtung gelöst, insbesondere für das System einer Fahrzeug-Lenkung.

Vorzugsweise ist die Auswerteeinrichtung ausgeführt, in Abhängigkeit des Störsignals wenigstens ein erstes Modellwertsignal zu bestimmen. Das erste Modellwertsignal wird einem ersten Ausgangssignal des ersten Reglers aufgeschaltet. Das Modellwertsignal modelliert eine Vorsteuerung. Eine Vorsteuerung beaufschlagt eine Stellgröße mit einem Wert, der unabhängig von Zuständen der Regelstrecke und daraus resultierenden Ist-Werten ist. Die Vorsteuerung ermöglicht die Berücksichtigung des aufgrund eines Soll-Wertverlaufs zu erwartenden Stellgrößen-Bedarfs. Da die Vorsteuerung eine Steuerung ist, kann sie das Führungsverhalten verbessern ohne die Stabilität zu gefährden. Analog können auch gemessene Störgrößen aufgeschaltet werden. In diesem Fall spricht man von Störgrößenaufschaltung. Damit wird das Störsignal als ein Vorsteuerungssignal bei einer Kaskadenregelung eines technischen Prozesses berücksichtigt.

In einer Weiterbildung der Erfindung ist die Auswerteeinrichtung für eine Ineinanderschaltung von mehreren Reglern vorgesehen. Bei der Ineinanderschaltung umfasst ein Führungssignal eines Reglers ein Ausgangssignal des in der Ineinanderschaltung jeweils nächst vorausgehenden Reglers. Die Auswerteeinrichtung ist ausgeführt, für jeden der Regler ein Modellführungssignal zu bestimmen. Das jeweilige Modellführungssignal wird dem Führungssignal des jeweiligen Reglers aufgeschaltet. Damit kann die Auswerteinrichtung vorteilhafterweise auch für eine Kaskadierung von mehr als zwei Reglern verwendet werden.

In einer besonders bevorzugten Ausgestaltung der Erfindung ist die Auswerteeinrichtung vorgesehen, ein Handlenkmoment eines Fahrers eines Fahrzeuges einer Regelung eines Lenkregelungssystems des Fahrzeuges aufzuschalten. Der erste Regler ist ausgeführt, einen Soll-Lenkwinkel zu regeln. Der Soll-Lenkwinkel ist durch das erste Führungssignal vorgegeben. Der zweite Regler ist ausgeführt, eine Soll-Gierrate zu regeln. Die Soll-Gierrate ist durch das zweite Führungssignal vorgegeben. Das Störsignal umfasst das Handlenkmoment des Fahrers des Fahrzeuges. Die Auswerteeinrichtung ist ausgeführt, das erste Modellführungssignal derart zu bestimmen, dass das erste Modellführungssignal einen Fahrer-Lenkwinkelanteil des Handlenkmoments umfasst. Ferner ist die Auswerteeinrichtung ausgeführt, das zweite Modellführungssignal derart zu bestimmen, dass das zweite Modellführungssignal einen Fahrer-Gierratenanteil des Handlenkmoments umfasst. Damit wird das Handlenkmoment als ein Führungssignal bei der Regelung des Lenkregelungssystems zu berücksichtigt.

Das Handlenkmoment wird in der Regel über ein Lenkrad aufgebracht. Durch das Handlenkmoment wird eine Lenksäule, Lenkwelle, oder Lenkspindel bewegt. Die Lenksäule, Lenkwelle oder Lenkspindel sind mechanisch mit gelenkten Vorder- und/oder Hinterrädern derart gekoppelt, dass das vom Fahrer am Lenkrad aufgebrachte Handlenkmoment in eine Lenkwinkeländerung der gelenkten Räder umgesetzt wird. Der Lenkwinkel oder die Lenkwinkeländerung wird von Widerstandsmomenten beeinflusst. Widerstandsmomente sind zum Beispiel Reifendruck, Bodenbeschaffenheit, ungleiche Gewichtsverteilung und daraus resultierende stärkere Belastung und Verformung einzelner Räder, Lastwechsel bei Kreisfahrt Seitenwind Fahrzeuggeschwindigkeit und/oder Querbeschleunigung

Der Lenkwinkel ist der Winkel, der von der Fahrzeuglängsachse und der Reifenlängsrichtung eingeschlossen wird. Der Lenkwinkel ist eine Funktion des Lenkradwinkels, das ist der Winkel, mit dem das Lenkrad gedreht wird, also der Einschlagwinkel des Lenkrades, und der Lenkübersetzung.

Die Gierrarte ist die Drehgeschwindigkeit des Fahrzeuges um die Hochachse des Fahrzeuges. Die Gierrate ergibt sich aus dem Lenkwinkel, einer Fahrzeuggeschwindigkeit und einer Querbeschleunigung.

Lenkwinkel und Gierrate werden zum Beispiel über ein lineares Einspurmodell modelliert. Das lineare Einspurmodell modelliert die Querdynamik und/oder Längsdynamik von zweispurigen Kraftfahrzeugen. In dem linearen Einspurmodell werden beide Räder einer Achse zu einem Rad zusammengefasst. Kinematik und Elastokinematik der Achse werden nur linear berücksichtigt. Außerdem wird ein lineares Reifenverhalten angesetzt.

Bei einer Fahrzeug-Lenkung ist ein Fahrereingriff mittels eines Handlenkmoments zunächst eine Störung, insbesondere bei automatisiert fahrenden Fahrzeugen, bei denen kein Fahrereingriff in die Lenkung mehr vorgesehen ist. Tatsächlich ist der Fahrereingriff aber als eine Führungsgröße anzusehen, insbesondere wenn der Fahrer wünscht, die Fahrtrichtung zu ändern.

In allen Ausführungsformen der Auswerteeinrichtung ist bevorzugt wenigstens einer der Regler ein stationär genauer Regler, vorzugsweise ein Regler mit integrierendem Regleranteil. Ein Regler mit integrierendem Regleranteil wirkt durch zeitliche Integration der Regelabweichung auf die Stellgröße mit einer Gewichtung ein, die durch eine Nachstellzeit gegeben ist. Eine Nachstellzeit von beispielsweise zwei Sekunden bedeutet, dass zur Zeit t=0 das Ausgangssignal des Reglers nach zwei Sekunden die Größe eines konstanten Eingangssignals erreicht hat. Allgemein ist die Nachstellzeit ein Maß dafür, wie stark die zeitliche Dauer der Regelabweichung in die Regelung eingeht. Oft erhält man allerdings ein asymptotisches Verhalten. Bei einem asymptotischen Verhalten geht die Regeldifferenz erst bei Erreichen des zeitlichen Grenzwertes t →∞ auf Null. In der Praxis reicht es, wenn die Regeldifferenz unter eine bestimmte Schwelle, zum Beispiel Messgenauigkeit oder Rauschabstand, sinkt. Ein integrierender Regleranteil führt zu einer genauen, aber langsamen Regelung.

Die erfindungsgemäße Ineinanderschaltung von mehreren Regelkreisen stellt ein Aufschalten eines Störsignals bereit. Die Ineinanderschaltung umfasst mehrere Regler. Bei der Ineinanderschaltung umfasst ein Führungssignal eines Reglers ein Ausgangssignal des in der Ineinanderschaltung jeweils nächst vorausgehenden Reglers. Die Ineinanderschaltung umfasst wenigstens einen ersten Regler. Der erste Regler regelt eine erste Regelgröße in Abhängigkeit eines ersten Führungssignals innerhalb eines ersten Regelkreises. Ferner umfasst die Ineinanderschaltung wenigstens einen zweiten Regler. Der zweite Regler regelt eine zweite Regelgröße in Abhängigkeit eines zweiten Führungssignals innerhalb des zweiten Regelkreises. Das erste Führungssignal des ersten Reglers umfasst ein zweites Ausgangssignal des zweiten Reglers. Außerdem umfasst die Ineinanderschaltung eine erfindungsgemäße Auswerteeinrichtung. Damit wird das Störsignal in der Ineinanderschaltung als ein Führungssignal bei einer Regelung eines technischen Prozesses berücksichtigt. Die Erfindung stellt also neben einer Auswerteeinrichtung auch eine Ineinanderschaltung mehrerer Regelkreise bereit.

Bevorzugt ist die Ineinanderschaltung zur Regelung einer Bewegung eines Fahrzeuges vorgesehen. Der erste Regler ist ausgeführt ist, einen Soll-Lenkwinkel zu regeln. Der Soll-Lenkwinkel ist durch das erste Führungssignal vorgegeben. Der zweite Regler ist ausgeführt, eine Soll-Gierrate zu regeln. Die Soll-Gierrate ist durch das zweite Führungssignal vorgegeben. Das Störsignal umfasst ein Handlenkmoment eines Fahrers des Fahrzeuges. Das erste Modellführungssignal umfasst ein Fahrer-Lenkwinkelanteil des Handlenkmoments. Das zweite Modellführungssignal umfasst einen Fahrer-Gierratenanteil des Handlenkmoments.

Beispielsweise umfasst die Regelstrecke für eine Fahrzeug-Lenkung einen Lenkungsaktuator, die Lenksäule und das Fahrzeug, zum Beispiel in Form eine Fahrzeugsteuerungseinrichtung. In dem ersten Regelkreis, der in der Ineinanderschaltung der innerste Regelkreis ist, wird der Lenkwinkel geregelt. Der erste Regler ist ein Lenkwinkelregler. Das erste Ausgangssignal des ersten Reglers ist beispielsweise ein elektrischer Phasenstrom für einen Elektromotor. Der Elektromotor treibt den Lenkungsaktuator an. Versorgt wird der Elektromotor von einem elektrischen Bordnetz des Fahrzeuges. Das Handlenkmoment wird auf die Lenksäule aufgebracht. In dem zweiten Regelkreis, der in der Ineinanderschaltung ein äußerer Regelkreis ist, wird die Gierrate geregelt. Der zweite Regler ist ein Gierratenregler. Das zweite Ausgangssignal des zweiten Reglers ist beispielsweise eine elektrische Spannung, die ein erstes Führungssignal für den Soll-Lenkwinkel des ersten Reglers darstellt. Alternativ ist das zweite Ausgangssignal ein digitales Signal.

Mit einer derartigen Ineinanderschaltung lässt sich der Fahrereingriff in den Regelkreisen der Regelungskaskade als Anteil einer jeweiligen Führungsgröße berücksichtigen. Dies erfolgt durch Zurückrechnung, also rückwärts zu den Sollwerten, des Fahrereinflusses auf die jeweiligen Eingänge der einzelnen Regler.

Vorzugsweise ist bei der Ineinanderschaltung das erste Modellwertsignal ein Unterstützungslenkmoment. Ein Unterstützungslenkmoment ist eine Vorsteuerung für den Lenkungsaktuator. Die Lenkkraft wird also zum einen von der Muskelkraft des Fahrers und zum anderen von einer weiteren Energiequelle in Form einer Lenkmomentunterstützung aufgebracht. Eine Lenkanlage mit Lenkmomentunterstützung wird auch Hilfskraftlenkanlage genannt. Ein Beispiel für eine Hilfskraftlenkanlage ist eine elektrische Hilfskraftlenkanlage. Erfindungsgemäß wird ein Unterstützungslenkmoment modelliert, um die Lenkanlage auch ohne eine konkret vorhandene Vorsteuerungseinrichtung vorzusteuern.

Das erfindungsgemäße Lenkregelungssystem für ein Fahrzeug umfasst einen ersten Sensor. Mit dem ersten Sensor wird ein Handlenkmoment eines Fahrers des Fahrzeuges als Störsignal erhalten. Ferner umfasst das Lenkregelungssystem einen ersten Regler. Mit dem ersten Regler wird ein erstes Ausgangssignal zur Regelung einer Differenz zwischen einer ersten Regelgröße in Form eines Ist-Lenkwinkels und einem Soll-Lenkwinkel erhalten. Der Soll-Lenkwinkel ist durch ein erstes Führungssignal des ersten Reglers vorgegeben. Außerdem umfasst das Lenkregelungssystem einen zweiten Sensor. Mit dem zweiten Sensor wird die erste Regelgröße erhalten. Des Weiteren umfasst das Lenkregelungssystem einen zweiten Regler. Mit dem zweiten Regler wird ein zweites Ausgangssignal zur Regelung einer Differenz zwischen einer zweiten Regelgröße in Form einer Ist-Gierrate und einer Soll-Gierrate erhalten. Die Soll-Gierrate ist durch ein zweites Führungssignal des zweiten Reglers vorgegeben. Das erste Führungssignal umfasst das zweite Ausgangssignal. Das Lenkregelungssystem umfasst auch einen dritten Sensor. Mit dem dritten Sensor wird die zweite Regelgröße erhalten. Ferner umfasst das Lenkregelungssystem eine erfindungsgemäße Auswerteeinrichtung. Das erste Modellführungssignal umfasst einen Fahrer-Lenkwinkelanteil des Handlenkmoments. Das zweite Modellführungssignal umfasst einen Fahrer-Gierratenanteil des Handlenkmoments. Damit wird das Handlenkmoment als ein Führungssignal bei einer Lenkregelung berücksichtigt.

Der erste Sensor ist beispielsweise ein Lenkmomentsensor. Der Lenkmomentsensor ist beispielsweise ein optischer Sensor, der zum Beispiel Drehungen mittels zusammenwirkender Leucht- und Fotodioden detektiert. Alternativ ist der Lenkmomentsensor ein Hall-Sensor. Der Lenkmomentsensor ist vorzugsweise in der Lenkanlage integriert. Der erste Regler ist ein Lenkwinkelregler zum Regeln des Lenkwinkels. Das erste Eingangssignal des ersten Reglers umfasst neben dem Soll-Lenkwinkel und dem Fahrer-Lenkwinkelanteil die erste Regelgröße, die ein Ist-Lenkwinkel ist. Der Ist-Lenkwinkel wird mit dem zweiten Sensor in Form eines Lenkwinkelsensors detektiert und auf einen Eingang des ersten Reglers rückgeführt. Der Lenkwinkelsensor ist zum Beispiel ein Hall-Sensor. Der zweite Regler ist ein Gierratenregler zum Regeln der Gierrate. Das zweite Eingangssignal des zweiten Reglers umfasst neben der Soll-Gierrate und dem Fahrer-Gierratenanteil die zweite Regelgröße, die eine Ist-Gierrate ist. Die Ist-Gierrate wird mit dem dritten Sensor in Form eines Gierratensensors detektiert und auf den Eingang des zweiten Reglers rückgeführt. Der Gierratensensor umfasst zum Beispiel einen Hohlzylinder, auf dem mehrere piezoelektrische Elemente angeordnet sind. Ein Teil dieser Elemente versetzt den Hohlzylinder in eine Schwingung. Der andere Teil dieser Elemente misst, ob sich die Schwingungsknoten an den Stellen, an denen diese Elemente angeordnet sind, verändern. Eine Gierbewegung des Fahrzeuges verändert die Schwingungsknoten des Hohlzylinders.

Bevorzugt umfasst das Lenkregelungssystem wenigstens ein Fahrerassistenzsystem. Das Fahrerassistenzsystem ist ausgeführt, in Abhängigkeit von mit wenigstens einem Umfelderfassungssensor des Fahrerassistenzsystems erhaltenen Bewegungsinformationen die Soll-Gierrate zu bestimmen.

Fahrerassistenzsysteme sind Systeme, die einerseits einen Fahrer bei einer Fahraufgabe assistieren, andererseits eine automatisierte Übernahme aller Fahraufgaben ermöglichen. In der Regel führt ein Fahrerassistenzsystem folgende Wirkkette aus: Erfassen eines Umfeldes mit wenigstens einem Umfelderfassungssensor, Verarbeiten der Erfassung, um globales Szenenverständnis des Umfeldes zu erhalten, Ableiten und Ausführen von Fahrzeugsteuerungsbefehlen, um auf das Umfeld zweckgerichtet zu reagieren, beispielsweise mit künstlicher Intelligenz.

Der Umfelderfassungssensor ist beispielsweise ein Radarsensor, Lidarsensor, bildgebender Sensor, Schallsensoren, Positionssensor oder Beschleunigungssensor. Alternativ umfasst das Fahrerassistenzsystem mehrere Umfelderfassungssensoren, um die Signale der einzelnen Umfelderfassungssensoren miteinander zu fusionieren. Durch Sensorfusion wird ein verbessertes Abbild des Umfeldes erreicht.

Vorzugsweise ist das Fahrerassistenzsystem ausgeführt, wenigstens den Fahrer-Lenkwinkelanteil und den Fahrer-Gierratenanteil zu erhalten. Außerdem ist das Fahrerassistenzsystem ausgeführt, diese erhaltenen Fahreranteile in Form von Steuerungssignalen einer Fahrzeugsteuerungseinrichtung auszugeben.

Vorteilhafterweise ist das Fahrerassistenzsystem ausgeführt, in Abhängigkeit der Fahreranteile eine Krümmung der Fahrbahn oder eine Querabweichung zur Fahrbahn zu berechnen. Alternativ wird das Fahrerassistenzsystem in Abhängigkeit der Fahreranteile deaktiviert. Bevorzugt wird in Abhängigkeit der Fahreranteile dem Fahrerassistenzsystem ein bestimmtes Verhalten aufgebracht oder antrainiert. Ist das Fahrerassistenzsystem zum Beispiel ein Spurhalteassistent, der das Fahrzeug mittig auf einer Fahrspur führt, werden die Fahreranteile genutzt, um den Spurhalteassistent mitzuteilen, dass das Fahrzeug sich mehr an dem linken Fahrbahnrand, in der Mitte oder am rechten Fahrbahnrand bewegen soll.

Die Erfindung bezieht sich auch auf ein automatisiert betreibbares Fahrzeug umfassend ein erfindungsgemäßes Lenkregelungssystem.

Ein automatisiert betreibbares Fahrzeug ist ein Fahrzeug, das über eine technische Ausrüstung verfügt, die zur Bewältigung einer Fahreraufgabe, einschließlich Längs- und Querführung, das jeweilige Fahrzeug nach Aktivierung einer entsprechenden automatischen Fahrfunktion, insbesondere einer hoch- oder vollautomatisierten Fahrfunktion nach der Norm SAEJ3016, mit einer Fahrzeugsteuerungseinrichtung steuern kann.

Ein teil-automatisiert betreibbares Fahrzeug kann bestimmte Fahraufgaben übernehmen. Die SAEJ3016 Norm unterscheidet zwischen SAE Level 2 und SAE Level 3. Level 2 ist dadurch definiert, dass die Fahrmodus-spezifische Ausführung von Lenk- und Beschleunigungs- /Bremsvorgängen durch ein oder mehrere Fahrerassistenzsysteme unter Verwendung von Informationen über die Fahrumgebung ausgeführt wird mit der Erwartung, dass der menschliche Fahrer alle verbleibenden Aspekte der dynamischen Fahraufgabe ausführt. Level 3 ist dadurch definiert, dass die Fahrmodus-spezifische Ausführung aller Aspekte der dynamischen Fahraufgabe durch ein automatisiertes Fahrsystem ausgeführt wird mit der Erwartung, dass der menschliche Fahrer auf Anfrage des Systems angemessen reagieren wird.

Ein vollautomatisiertes Fahrzeug ersetzt den Fahrer. Die SAEJ3016 Norm unterscheidet zwischen SAE Level 4 und SAE Level 5 Level 4 ist dadurch definiert, dass die Fahrmodus-spezifische Ausführung aller Aspekte der dynamischen Fahraufgabe durch ein automatisiertes Fahrsystem ausgeführt wird, selbst wenn der menschliche Fahrer auf Anfrage des Systems nicht angemessen reagiert. Level 5 ist dadurch definiert, dass die durchgängige Ausführung aller Aspekte der dynamischen Fahraufgabe durch ein automatisiertes Fahrsystem unter allen Fahr- und Umweltbedingungen, die von einem menschlichen Fahrer bewältigt werden können, ausgeführt wird.

Ein reines Assistenzsystem assistiert dem Fahrer bei der Durchführung einer Fahraufgabe. Dies entspricht SAE Level 1.

Ein automatisiert betreibbares Fahrzeug mit einem erfindungsgemäßen Lenkregelungssystem berücksichtigt einen Fahrereingriff auch in einem automatisierten Fahrbetrieb, ohne die Regelperformanz zu reduzieren.

Durch das erfindungsgemäße Verfahren werden Fahrereingriffe bei einer Regelung einer Bewegung eines Fahrzeuges berücksichtigt. Für die Regelung sind mehrere Regelkreise derart ineinander geschaltet sind, dass ein Führungssignal eines Reglers ein Ausgangssignal des in der Ineinanderschaltung jeweils nächst vorausgehenden Reglers umfasst. Das Verfahren umfasst die folgenden Verfahrensschritte: In einem ersten Verfahrensschritt wird ein Handlenkmoment in Form eines Fahrereingriffs erhalten. In einem zweiten Verfahrensschritt wird wenigstens ein Fahrer-Lenkwinkelanteils und ein Fahrer-Gierratenanteil in Abhängigkeit des Handlenkmoments bestimmt. In einem dritten Verfahrensschritt wird wenigstens ein erstes Führungssignal für einen ersten Regler in Abhängigkeit einer Aufschaltung des Fahrer-Lenkwinkelanteils auf einen Soll-Lenkwinkel erhalten. Außerdem wird ein zweites Führungssignals für einen zweiten Regler in Abhängigkeit einer Aufschaltung des Fahrer-Gierratenanteils auf eine Soll-Gierrate erhalten. Damit wird das Handlenkmoment als ein Führungssignal bei einer Bewegungsregelung zu berücksichtigt. Damit stellt die Erfindung auch ein Verfahren bereit zur Berücksichtigung von Fahrereingriffen bei einer Regelung einer Bewegung eines Fahrzeuges.

Vorzugsweise wird die Soll-Gierrate in Abhängigkeit von mit wenigstens einem Umfelderfassungssensor wenigstens eines Fahrerassistenzsystems erhaltenen Bewegungsinformationen erhalten.

Besonders bevorzugt wird zur Durchführung des Verfahrens eine erfindungsgemäße Auswerteeinrichtung oder ein erfindungsgemäßes Lenkregelungssystem.

Das erfindungsgemäße Computerprogrammprodukt berücksichtigt Fahrereingriffe bei einer Regelung einer Bewegung eines Fahrzeuges. Das Computerprogrammprodukt ist ausgeführt, in einen Speicher eines Computers geladen zu werden. Das Computerprogrammprodukt umfasst Softwarecodeabschnitte, mit denen die Schritte des erfindungsgemäßen Verfahrens ausgeführt werden, wenn das Computerprogrammprodukt auf dem Computer läuft.

Ein Computer ist eine Einrichtung zum Verarbeiten von Daten, die mittels programmierbarer Rechenvorschriften Daten verarbeiten kann. Eine Auswerteeinrichtung kann ein Computer sein.

Software ist ein Sammelbegriff für Programme und zugehörigen Daten. Das Komplement zu Software ist Hardware. Hardware bezeichnet die mechanische und elektronische Ausrichtung eines Daten verarbeitenden Systems.

Computerprogrammprodukte umfassen in der Regel eine Folge von Befehlen, durch die die Hardware bei geladenem Programm veranlasst wird, ein bestimmtes Verfahren durchzuführen, das zu einem bestimmten Ergebnis führt. Wenn das betreffende Programm auf einem Computer zum Einsatz kommt, ruft das Computerprogrammprodukt einen technischen Effekt hervor, nämlich die Berücksichtigung von Fahrereingriffen bei einer Regelung einer Bewegung eines Fahrzeuges.

Ein Speicher ist ein Medium für die Sicherung von Daten.

Das erfindungsgemäße Computerprogrammprodukt ist Plattform unabhängig. Das heißt, es kann auf jeder beliebigen Rechenplattform ausgeführt werden. Bevorzugt wird das Computerprogrammprodukt auf einer erfindungsgemäßen Auswerteeinrichtung ausgeführt.

Die Erfindung ist nicht auf eine Regelung einer Fahrzeuglenkung und damit der Querdynamik beschränkt. Im Rahmen der Erfindung liegt analog eine entsprechende Regelung der Längsdynamik. Die Längsführung wird gewöhnlich mit Gaspedal und Bremsanlage beeinflusst. Das Gaspedal ist in der Regel ein x-by-wire System. Mit x-by-wire wird der Ersatz von mechanischen Verbindungen, Signalen und Systemen zur manuellen Steuerung durch die Leitung elektrischer, elektronischer, optoelektronischer oder optischer Steuersignale zwischen den verwendeten Bedienelementen und den ausführenden Aktoren bezeichnet. Dann ist ein Fahrereingriff in Form einer Betätigung des Gaspedals direkt als Eingangssignal eines Reglers behandelbar. Bei der Bremsanlage existiert ein in der Regel hydraulischer Durchgriff auf das Bremsmoment.

Die Erfindung wird anhand der nachfolgenden Figuren beispielhaft erläutert. Es zeigen:
Fig. 1 ein Ausführungsbeispiel einer erfindungsgemäßen Auswerteeinrichtung in einer Regelungskaskade umfassend zwei Regelkreise,
Fig. 2 ein Ausführungsbeispiel einer erfindungsgemäßen Auswerteeinrichtung in einer Regelungskaskade umfassend drei Regelkreise,
Fig. 3 ein Ausführungsbeispiel einer erfindungsgemäßen Auswerteeinrichtung in einer Regelungskaskade umfassend zwei Regelkreise und eine Vorsteuerung,
Fig. 4 ein Ausführungsbeispiel eines erfindungsgemäßen Lenkregelungssystems mit einer Auswerteeinrichtung nach Fig. 1,
Fig. 5 ein Ausführungsbeispiel eines erfindungsgemäßen Lenkregelungssystems mit einer Auswerteeinrichtung nach Fig. 2,
Fig. 6 ein Ausführungsbeispiel eines erfindungsgemäßen Lenkregelungssystems mit einem Ausführungsbeispiel einer erfindungsgemäßen Auswerteeinrichtung in einer Regelungskaskade umfassend vier Regelkreise,
Fig. 7 ein Ausführungsbeispiel eines Lenkregelungssystems nach Fig. 6 mit Nutzung von Modellführungsgrößen in einem Fahrerassistenzsystem,
Fig. 8 eine schematische Darstellung eines erfindungsgemäßen Verfahrens und
Fig. 9 ein Ausführungsbeispiel eines Computerprogrammprodukts.

In den Figuren bezeichnen gleiche Bezugszeichen gleiche oder funktionsähnliche Gegenstände. In den Figuren werden zur Vermeidung von Wiederholungen jeweils nur die relevanten Gegenstände mit Bezugszeichen gekennzeichnet.

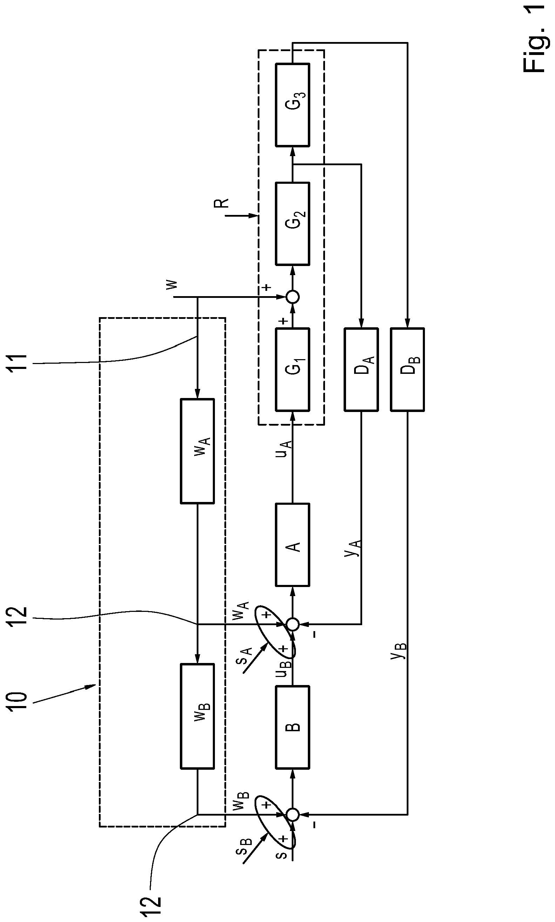

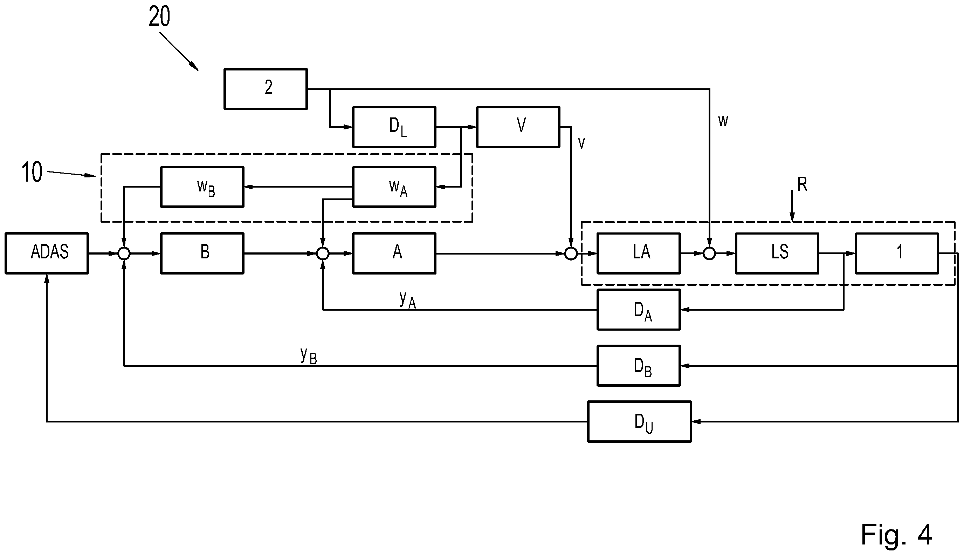

Fig. 1 zeigt eine Auswerteeinrichtung 10 in einer Kaskadenregelung. Die Kaskadenregelung umfasst einen inneren ersten Regler A und einen äußeren zweiten Regler B. Der erste Regler A und der zweite Regler B regeln eine Regelstrecke R. Die Regelstrecke umfasst drei Komponenten. Die Komponenten sind als eine erste Übertragungsfunktion G1, eine zweite Übertragungsfunktion G2 und eine dritte Übertragungsfunktion G3 modelliert. Eine Übertragungsfunktion G modelliert in der Regel das Verhalten linearer Regelkreisglieder. Die Übertragungsfunktion entsteht beispielsweise durch die Laplace-Transformation oder die z-Transformation der systembeschreibenden linearen Differentialgleichungen. Die Übertragungsfunktion beschreibt das Eingangs- und Ausgangsverhalten eines linearen, zeitinvarianten Übertragungssystems. Im Beispiel eines Lenkregelungssystems 20 ist die erste Komponente der Regelstrecke R ein Lenkungsaktuator LA. Die zweite Komponente der Regelstrecke R ist eine Lenksäule LS. Die dritte Komponente der Regelstrecke R ist ein Fahrzeug 1, siehe auch Figur 4. Die Regelstrecke R wird mit einem Störsignal w beeinflusst. Im Falle des Lenkregelungssystems 20 ist das Störsignal w ein Handlenkmoment.

Über eine Eingangsschnittstelle 11 erhält die Auswerteeinrichtung 10 das Störsignal w. In Abhängigkeit des Störsignals w bestimmt die Auswerteeinrichtung 10 ein erstes Modellführungssignal wA. Im Falle des Lenkregelungssystems 20 ist das erste Modellführungssignal wA ein Fahrer-Lenkwinkelanteil. Die Auswerteeinrichtung 10 ist ausgeführt, das erste Modellführungssignal wA in Abhängigkeit des Störsignals w und wenigstens einer der Übertragungsfunktionen G1, G2 und/oder G3 zu berechnen. Analog bestimmt die Auswerteeinrichtung 10 ein zweites Modellführungssignal wB. Im Falle einer Fahrzeug-Lenkung ist das zweite Modellführungssignal wB ein Fahrer-Gierratenanteil.

Das erste Modellführungssignal wA wird über eine Ausgangsschnittstelle 12 der Auswerteeinrichtung 10 auf ein zweites Ausgangssignal uB des zweiten Reglers B aufgeschaltet. Die Aufschaltung kann eine Addition oder eine Subtraktion sein. Das zweite Ausgangssignal uB und das aufgeschaltete erste Modellführungssignal wA bilden zusammen das erste Führungssignal sA für den ersten Regler A.

Neben dem ersten Führungssignal sA erhält der erste Regler A als Eingang eine erste Regelgröße yA. Im Falle des Lenkregelungssystems 20 ist die erste Regelgröße yA der Ist-Lenkwinkel. Die erste Regelgröße yA wird innerhalb der Regelstrecke R nach der zweiten Komponente mit einem zweiten Sensor DA gemessen. Im Falle des Lenkregelungssystems 20 ist der zweite Sensor DA ein Lenkwinkelsensor. Der erste Regler A, die betroffenen Komponenten der Regelstrecke R und der zweite Sensor DA bilden einen inneren ersten Regelkreis.

Das zweite Modellführungssignal wB wird über die Ausgangsschnittstelle 12 auf ein Führungssignal s für die Regelstrecke R aufgeschaltet. Die Aufschaltung kann ebenfalls eine Addition oder eine Subtraktion sein. Das Führungssignal s und das aufgeschaltete zweite Modellführungssignal wB bilden zusammen das zweite Führungssignal sB für den zweiten Regler B.

Neben dem zweiten Führungssignal sB erhält der zweite Regler B als Eingang eine zweite Regelgröße yB. Im Falle des Lenkregelungssystems 20 ist die zweite Regelgröße yB die Ist-Gierrate. Die zweite Regelgröße yB wird innerhalb der Regelstrecke R nach der dritten Komponente mit einem dritten Sensor DB gemessen. Im Falle des Lenkregelungssystems 20 ist der dritte Sensor DB ein Gierratensensor. Der zweite Regler B, die betroffenen Komponenten der Regelstrecke R und der dritte Sensor DB bilden einen äußeren zweiten Regelkreis. Der erste Regelkreis ist in den zweiten Regelkreis geschaltet.

Die Auswerteeinrichtung 10 weist zur Ausgabe des ersten Modellführungssignals wA, zur Ausgabe des zweiten Modellführungssignals wB und zur Ausgabe aller weiteren Modellführungssignale jeweils eine separate Ausgangsschnittstelle 12 auf. Alternativ ist eine einzige Ausgangsschnittstelle 12 für alle Modellführungssignale vorgesehen.

Die Regelstrecke R wird mit einem ersten Ausgangssignal uA reglerseitig angesteuert.

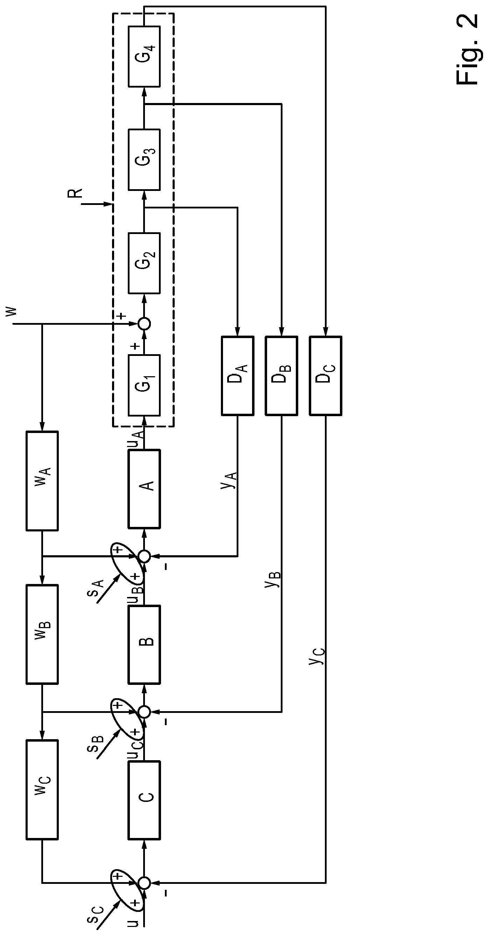

Fig. 2 ist eine Erweiterung von Fig. 1 um einen dritten Regler C. Die Regelstrecke R umfasst eine vierte Übertragungsfunktion G4.

In Abhängigkeit des Störsignals w bestimmt die Auswerteeinrichtung 10 ein drittes Modellführungssignal wC. Im Falle des Lenkregelungssystems 20 ist das dritte Modellführungssignal wC ein Fahrer-Fahrtrichtungsanteil des Handlenkmoments. Die Fahrtrichtung ergibt sich aus dem Schwimmwinkel. Der Schwimmwinkel ist der Winkel zwischen einem Geschwindigkeitsvektor im Schwerpunkt des Fahrzeuges 1 und einer Fahrzeuglängsachse. Die Auswerteeinrichtung 10 ist ausgeführt, das dritte Modellführungssignal wC in Abhängigkeit des Störsignals w und wenigstens einer der Übertragungsfunktionen G1, G2, G3 und/oder G4 zu berechnen.

Das zweite Modellführungssignal wB wird über die Ausgangsschnittstelle 12 auf ein drittes Ausgangssignal uC des dritten Reglers C aufgeschaltet. Die Aufschaltung kann eine Addition oder eine Subtraktion sein. Das dritte Ausgangssignal uC und das aufgeschaltete zweite Modellführungssignal wB bilden zusammen das zweite Führungssignal sB für den zweiten Regler B.

Das dritte Modellführungssignal wC wird über die Ausgangsschnittstelle 12 auf ein Führungssignal s für die Regelstrecke R aufgeschaltet. Die Aufschaltung kann ebenfalls eine Addition oder eine Subtraktion sein. Das Führungssignal s und das aufgeschaltete dritte Modellführungssignal wC bilden zusammen das dritte Führungssignal sC für den dritten Regler C.

Neben dem dritten Führungssignal sC erhält der dritte Regler C als Eingang eine dritte Regelgröße yC. Im Falle des Lenkregelungssystems 20 umfasst die dritte Regelgröße yC die Ist-Fahrtrichtung. Die dritte Regelgröße yC wird innerhalb der Regelstrecke R nach der dritten Komponente mit einem vierten Sensor DC gemessen. Im Falle einer Fahrzeugbewegung ist der vierte Sensor DC ein Positionssensor, vorzugsweise ein GPS-Sensor. Die Position wird alternativ über Positionsdaten einer Kamera oder aus einer Datenfusion von positionserfassenden Sensoren erhalten. Der dritte Regler C, die betroffenen Komponenten der Regelstrecke R und der vierte Sensor DC bilden einen äußeren dritten Regelkreis. Der zweite Regelkreis ist in den dritten Regelkreis geschaltet.

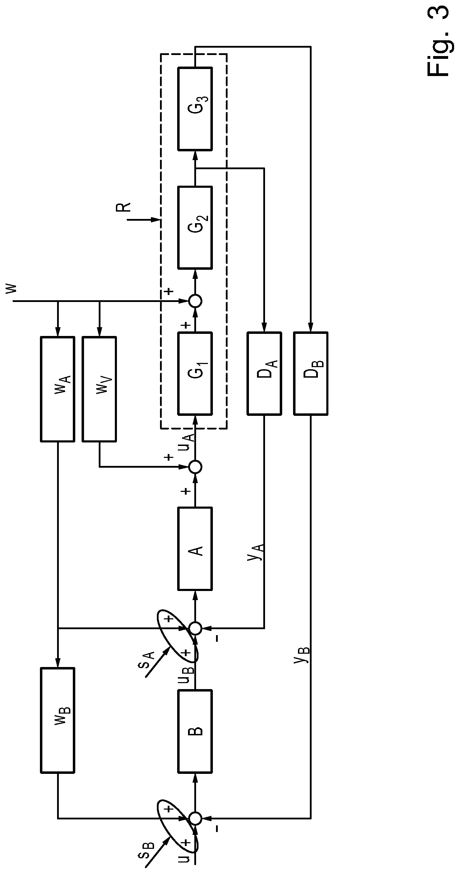

Fig. 3 unterscheidet sich von Fig. 1 durch ein zusätzliches Modellwertsignal wV. In Abhängigkeit des Störsignals w bestimmt die Auswerteeinrichtung 10 das Modellwertsignal wV. Das Modellwertsignal wV ist beispielsweise eine Funktion der Übertragungsfunktionen G1, G2 und/oder G3. Im Falle einer Lenkmomentunterstützung werden alternativ Kennfelder verwendet. Das Modellwertsignal wV wird auf das erste Ausgangssignal uA des ersten Reglers A aufgeschaltet und modelliert eine Vorsteuerung. Im Falle des Lenkregelungssystems 20 modelliert das Modellwertsignal wV eine Lenkmomentunterstützung.

Fig. 4 zeigt das Lenkregelungssystem 20. Ein Fahrer 2 des Fahrzeuges 1 übt ein Handlenkmoment als Störsignal w aus. Das Handlenkmoment wird mit einem ersten Sensor DL erfasst. Der erste Sensor DL ist ein Lenkmomentsensor. Das erfasste Handlenkmoment ist ein Eingangssignal für die Auswerteeinrichtung 10. Das Handlenkmoment wird ferner von einer Vorsteuerung V für eine Lenkmomentunterstützung verarbeitet. Die Vorsteuerung gibt ein Unterstützungsmoment v auf das erste Ausgangssignal uA des ersten Reglers A aus.

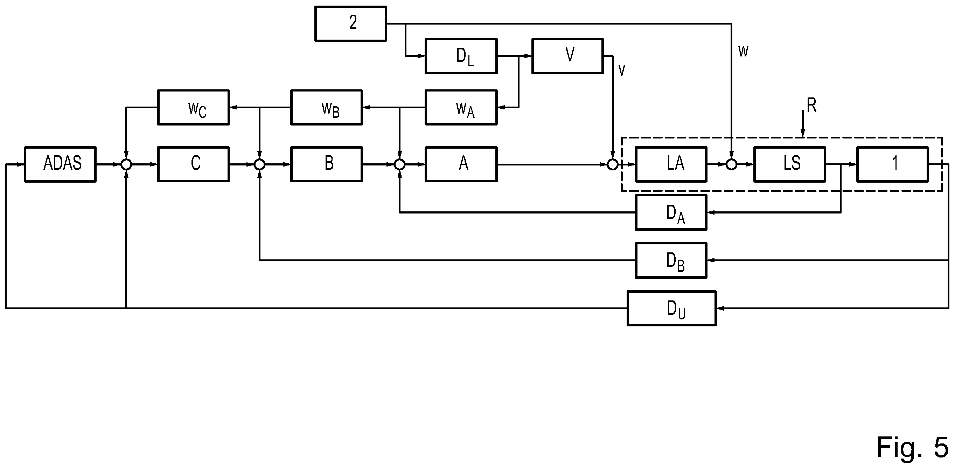

Das Lenkregelungssystem 20 umfasst ein Fahrerassistenzsystem ADAS. Das Fahrerassistenzsystem erhält Daten eines Umfelderfassungssensors DU. Der Umfelderfassungssensor DU ist zum Beispiel eine Kamera. In Abhängigkeit dieser Daten bestimmt das Fahrerassistenzsystem das Führungssignal s für die Regelstrecke R. Fig. 5 ist eine Erweiterung von Fig. 4 um den dritten Regler C in Analogie zu Figur 2

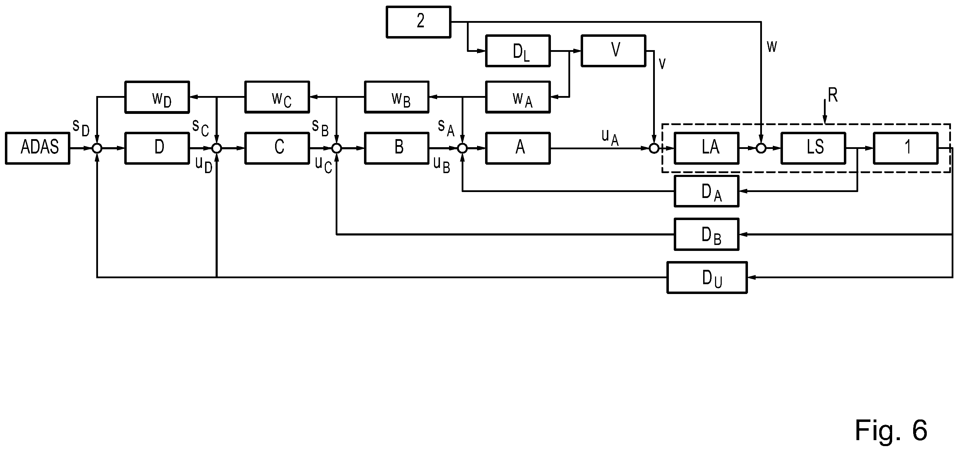

Fig. 6 ist eine Erweiterung von Fig. 5 um einen vierten Regler D. In Abhängigkeit des Störsignals w bestimmt die Auswerteeinrichtung 10 ein viertes Modellführungssignal wD. Im Falle der Fahrzeugbewegung ist das vierte Modellführungssignal wC ein Fahrer-Positionsanteil des Handlenkmoments. Die Position ergibt sich aus Integration der Fahrzeuggeschwindigkeit oder der Fahrtrichtung über die Zeit unter Berücksichtigung der Querdynamik. Die Auswerteeinrichtung 10 ist ausgeführt, das vierte Modellführungssignal wD in Abhängigkeit des Störsignals w und wenigstens einer der Übertragungsfunktionen G1, G2, G3 zu berechnen.

Das dritte Modellführungssignal wC wird über die Ausgangsschnittstelle 12 auf ein viertes Ausgangssignal uD des vierten Reglers D aufgeschaltet. Die Aufschaltung kann eine Addition oder eine Subtraktion sein. Das vierte Ausgangssignal uD und das aufgeschaltete dritte Modellführungssignal wC bilden zusammen das dritte Führungssignal sC für den dritten Regler C.

Das vierte Modellführungssignal wD wird über die Ausgangsschnittstelle 12 auf ein Führungssignal s für die Regelstrecke R aufgeschaltet. Die Aufschaltung kann ebenfalls eine Addition oder eine Subtraktion sein. Das Führungssignal s und das aufgeschaltete vierte Modellführungssignal wD bilden zusammen das vierte Führungssignal sD für den vierten Regler D.

Neben dem dritten Führungssignal sC erhält der dritte Regler C als Eingang eine dritte Regelgröße yC. Im Falle des Lenkregelungssystems 20 umfasst die dritte Regelgröße yC die Ist-Fahrtrichtung. Die dritte Regelgröße yC wird innerhalb der Regelstrecke R nach der dritten Komponente mit einem vierten Sensor DC gemessen. Im Falle einer Fahrzeugbewegung ist der vierte Sensor DC ein Positionssensor, vorzugsweise ein GPS-Sensor. Der dritte Regler C, die betroffenen Komponenten der Regelstrecke R und der vierte Sensor DC bilden einen äußeren dritten Regelkreis. Der zweite Regelkreis ist in den dritten Regelkreis geschaltet.

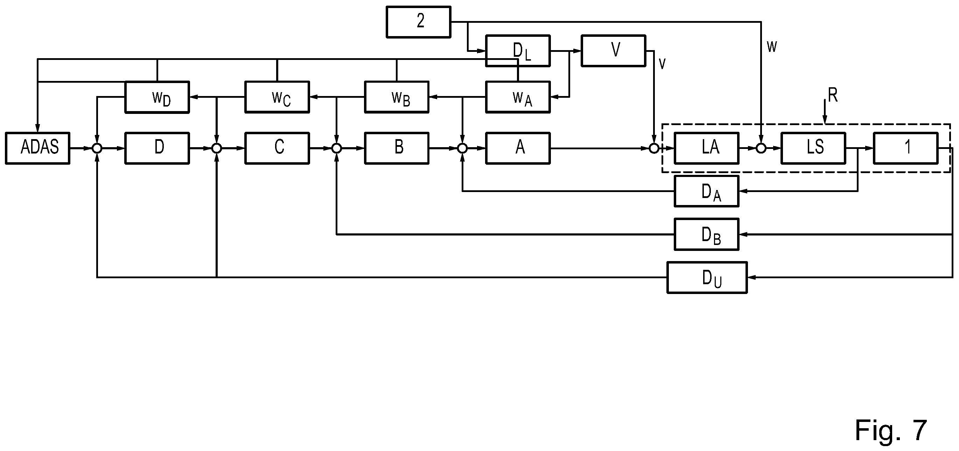

Fig. 7 unterscheidet sich von Fig. 6 dadurch, dass zusätzlich das erste Modellführungssignal wA, das zweite Modellführungssignal wB, das dritte Modellführungssignal wC und das vierte Modellführungssignal wD jeweils in das Fahrerassistenzsystem ADAS geleitet werden. Damit kann das Fahrerassistenzsystem ADAS zusätzlich zu den Daten des Umfelderfassungssensors DU weitere Informationen nutzen.

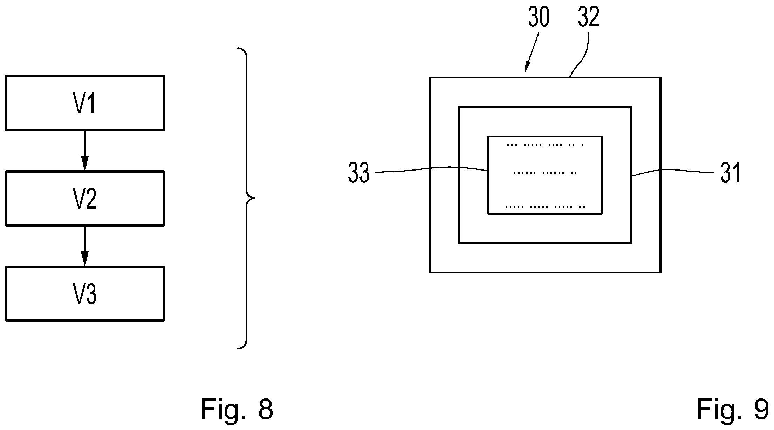

Fig. 8 zeigt das erfindungsgemäße Verfahren. In einem ersten Verfahrensschritt V1 wird als ein Störsignal w das Handlenkmoment in Form eines Fahrereingriffes erhalten. In einem zweiten Verfahrensschritt V2 werden wenigstens das erste Modellführungssignal wA in Form eines Fahrer-Lenkwinkelanteils und das zweite Modellführungssignal wB in Form eines Fahrer-Gierratenanteils jeweils in Abhängigkeit des Handlenkmoments bestimmt. In einem dritten Verfahrensschritt werden wenigstens das erste Führungssignal sA für den ersten Regler A in Abhängigkeit einer Aufschaltung des Fahrer-Lenkwinkelanteils wA auf den Soll-Lenkwinkel und das zweite Führungssignal sB für den zweiten Regler B in Abhängigkeit einer Aufschaltung des Fahrer-Gierratenanteils wB auf die Soll-Gierrate erhalten.

Die Verfahrensschritte V1, V2 und V3 werden vorzugsweise als Softwarecodeabschnitte 33 programmiert und in einem Speicher 31 eines Computers 32 als Computerprogrammprodukt ausgeführt, vergleiche Fig. 9.

### Bezugszeichen

- 1: Fahrzeug
- 2: Fahrer
- DL: erster Sensor
- V: Vorsteuerung Lenkmomentunterstützung
- v: Unterstützungsmoment
- LA: Lenkungsaktuator
- LS: Lenksäule
- 10: Auswerteeinrichtung
- 11: Eingangsschnittstelle
- 12: Ausgangsschnittstelle
- 20: Lenkregelungssystem
- s: Führungssignal Regelstrecke
- w: Störsignal
- R: Regelstrecke
- G1: erste Übertragungsfunktion
- G2: zweite Übertragungsfunktion
- G3: dritte Übertragungsfunktion
- G4: vierte Übertragungsfunktion
- A: erster Regler
- B: zweiter Regler
- C: dritter Regler
- D: vierter Regler
- sA: erstes Führungssignal
- sB: zweites Führungssignal
- sC: drittes Führungssignal
- sD: viertes Führungssignal
- wA: erstes Modellführungssignal
- wB: zweites Modellführungssignal
- wC: drittes Modellführungssignal
- wD: viertes Modellführungssignal
- wV: Modellwertsignal
- uA: erstes Ausgangssignal
- uB: zweites Ausgangssignal
- uC: drittes Ausgangssignal
- uD: viertes Ausgangssignal
- yA: erste Regelgröße
- yB: zweite Regelgröße
- yC: dritte Regelgröße
- yD: vierte Regelgröße
- DA: zweiter Sensor
- DB: dritter Sensor
- DC: vierter Sensor
- DU: Umfelderfassungssensor
- ADAS: Fahrerassistenzsystem
- V1-V3: Verfahrensschritte
- 30: Computerprogrammprodukt
- 31: Speicher
- 32: Computer
- 33: Softwarecodeabschnitte

## Patentansprüche

1. Auswerteeinrichtung (10) für eine Ineinanderschaltung wenigstens eines ersten Regelkreises und eines zweiten Regelkreises zum Aufschalten eines Störsignals (w), wobei die Ineinanderschaltung
• wenigstens einen ersten Regler (A) umfasst, um eine erste Regelgröße (yA) in Abhängigkeit eines ersten Führungssignals (sA) innerhalb des ersten Regelkreises zu regeln, und
• wenigstens einen zweiten Regler (B), um eine zweite Regelgröße (yB) in Abhängigkeit eines zweiten Führungssignals (sB) innerhalb des zweiten Regelkreises zu regeln,
• wobei das erste Führungssignal (sA) des ersten Reglers (A) ein zweites Ausgangssignal (uB) des zweiten Reglers (B) umfasst, umfassend
• eine Eingangsschnittstelle (11), um das Störsignal (w) zu erhalten, **dadurch gekennzeichnet, dass** die Auswerteeinrichtung (10) ausgeführt ist, in Abhängigkeit des Störsignals (w) wenigstens
∘ ein erstes Modellführungssignal (wA) für den ersten Regler (A) und
∘ ein zweites Modellführungssignal (wB) für den zweiten Regler (B) zu bestimmen,
und
• wenigstens eine Ausgangsschnittstelle (12), um
∘ das erste Modellführungssignal (wA) dem ersten Führungssignal (sA) und
∘ das zweite Modellführungssignal (wB) dem zweiten Führungssignal (sB) derart aufzuschalten,
dass das erste Führungssignal (sA) einen Anteil des Störsignals (w) und das zweite Führungssignal (sB) einen Anteil des Störsignals (w) umfasst, um das Störsignal (w) als ein Führungssignal bei einer Regelung eines technischen Prozesses zu berücksichtigen.

2. Auswerteeinrichtung (10) nach Anspruch 1, wobei die Auswerteeinrichtung (10) ausgeführt ist, in Abhängigkeit des Störsignals (w) wenigstens ein erstes Modellwertsignal (wV) zu bestimmen, um das erste Modellwertsignal (wV) einem ersten Ausgangssignal (uA) des ersten Reglers (A) aufzuschalten.

3. Auswerteeinrichtung (10) nach Anspruch 1 oder 2, wobei bei einer Ineinanderschaltung von mehreren Reglern (A, B, C, D), bei der ein Führungssignal (sA, sB, sC) eines Reglers (A, B, C) ein Ausgangssignal (uB, uC, uD) des in der Ineinanderschaltung jeweils nächst vorausgehenden Reglers (B, C, D) umfasst, die Auswerteeinrichtung (10) ausgeführt ist, für jeden der Regler (A,B, C, D) ein Modellführungssignal (wA, wB, wC, wD) zu bestimmen, um das jeweilige Modellführungssignal (wA, wB, wC, wD) dem Führungssignal (sA, sB, sC, sD) des jeweiligen Reglers (A, B, C, D) aufzuschalten.

4. Auswerteeinrichtung (10) nach einem der Ansprüche 1 bis 3 zum Aufschalten eines Handlenkmoments eines Fahrers (2) eines Fahrzeuges (1) einer Regelung eines Lenkregelungssystems (20) des Fahrzeuges (1), wobei
• der erste Regler (A) ausgeführt ist, einen Soll-Lenkwinkel zu regeln, wobei durch das erste Führungssignal (sA) der Soll-Lenkwinkel vorgegeben ist,
• der zweite Regler (B) ausgeführt ist, eine Soll-Gierrate zu regeln, wobei durch das zweite Führungssignal (sB) die Soll-Gierrate vorgegeben ist und
• das Störsignal (w) das Handlenkmoment des Fahrers (2) des Fahrzeuges (1) umfasst,
wobei die Auswerteeinrichtung (10) ausgeführt ist,
• das erste Modellführungssignal (wA) derart zu bestimmen, dass das erste Modellführungssignal (wA) einen Fahrer-Lenkwinkelanteil des Handlenkmoments umfasst und
• das zweite Modellführungssignal (wB) derart zu bestimmen, dass das zweite Modellführungssignal (wB) einen Fahrer-Gierratenanteil des Handlenkmoments umfasst,
um das Handlenkmoment als ein Führungssignal bei der Regelung des Lenkregelungssystems zu berücksichtigen.

5. Ineinanderschaltung von mehreren Regelkreisen zum Aufschalten eines Störsignals (w), wobei die Ineinanderschaltung mehrere Regler (A, B, C, D) umfasst, wobei bei der Ineinanderschaltung ein Führungssignal (sA, sB, sC) eines Reglers (A, B, C) ein Ausgangssignal (uB, uC, uD) des in der Ineinanderschaltung jeweils nächst vorausgehenden Reglers (B, C, D) umfasst, umfassend
• wenigstens einen ersten Regler (A), um eine erste Regelgröße (yA) in Abhängigkeit eines ersten Führungssignals (sA) innerhalb eines ersten Regelkreises zu regeln,
• wenigstens einen zweiten Regler (B), um eine zweite Regelgröße (yB) in Abhängigkeit eines zweiten Führungssignals (sB) innerhalb des zweiten Regelkreises zu regeln,
wobei das erste Führungssignal (sA) des ersten Regler (A) ein zweites Ausgangssignal (uB) des zweiten Reglers (B) umfasst, und
• eine Auswerteeinrichtung (10) nach einem der Ansprüche 1 bis 4,
um das Störsignal (w) als ein Führungssignal bei einer Regelung eines technischen Prozesses zu berücksichtigen.

6. Ineinanderschaltung nach Anspruch 5 zur Regelung einer Bewegung eines Fahrzeuges (1), wobei
• der erste Regler (A) ausgeführt ist, einen Soll-Lenkwinkel zu regeln, wobei durch das erste Führungssignal (sA) der Soll-Lenkwinkel vorgegeben ist,
• der zweite Regler (B) ausgeführt ist, eine Soll-Gierrate zu regeln, wobei durch das zweite Führungssignal (sB) die Soll-Gierrate vorgegeben ist,
• das Störsignal (w) ein Handlenkmoment eines Fahrers (2) des Fahrzeuges (1) umfasst,
• das erste Modellführungssignal (wA) einen Fahrer-Lenkwinkelanteil des Handlenkmoments umfasst und
• das zweite Modellführungssignal (wB) einen Fahrer-Gierratenanteil des Handlenkmoments umfasst.

7. Ineinanderschaltung nach Anspruch 6, wobei das erste Modellwertsignal (wV) ein Unterstützungslenkmoment ist.

8. Lenkregelungssystem (20) für ein Fahrzeug (1), umfassend
• einen ersten Sensor (DL), um ein Handlenkmoment eines Fahrers (2) des Fahrzeuges (1) als Störsignal (w) zu erhalten,
• einen ersten Regler (A), um ein erstes Ausgangssignal (uA) zur Regelung einer Differenz zwischen einer ersten Regelgröße (yA) in Form eines Ist-Lenkwinkels und einem Soll-Lenkwinkel zu erhalten, wobei durch ein erstes Führungssignal (sA) des ersten Reglers (A) der Soll-Lenkwinkel vorgegeben ist,
• einen zweiten Sensor (DA), um die erste Regelgröße (yA) zu erhalten,
• einen zweiten Regler (B), um ein zweites Ausgangssignal (uB) zur Regelung einer Differenz zwischen einer zweiten Regelgröße (yB) in Form einer Ist-Gierrate (yB) und einer Soll-Gierrate zu erhalten, wobei durch ein zweites Führungssignal (sB) des zweiten Reglers (B) die Soll-Gierrate vorgegeben ist und wobei das erste Führungssignal (sA) das zweite Ausgangssignal (uB) umfasst,
• einen dritten Sensor (DB), um die zweite Regelgröße (yB) zu erhalten, und
• eine Auswerteeinrichtung (10) nach einem der Ansprüche 1 bis 4, wobei
∘ das erste Modellführungssignal (wA) einen Fahrer-Lenkwinkelanteil des Handlenkmoments umfasst und
∘ das zweite Modellführungssignal (wB) einen Fahrer-Gierratenanteil des Handlenkmoments umfasst,
um das Handlenkmoment als ein Führungssignal bei einer Lenkregelung zu berücksichtigen.

9. Lenkregelungssystem (20) nach Anspruch 8, wobei das Lenkregelungssystem (20) wenigstens ein Fahrerassistenzsystem (ADAS) umfasst, wobei das Fahrerassistenzsystem (ADAS) ausgeführt ist, in Abhängigkeit von mit wenigstens einem Umfelderfassungssensor (DU) des Fahrerassistenzsystems (ADAS) erhaltenen Bewegungsinformationen die Soll-Gierrate zu bestimmen.

10. Lenkregelungssystem (20) nach Anspruch 9, wobei das Fahrerassistenzsystem (ADAS) ausgeführt ist,
• wenigstens den Fahrer-Lenkwinkelanteil und den Fahrer-Gierratenanteil zu erhalten und
• diese erhaltenen Fahreranteile in Form von Steuerungssignalen einer Fahrzeugsteuerungseinrichtung auszugeben.

11. Automatisiert betreibbares Fahrzeug (1) umfassend ein Lenkregelungssystem (20) nach einem der Ansprüche 8 bis 10.

12. Verfahren zur Berücksichtigung von Fahrereingriffen bei einer Regelung einer Bewegung eines Fahrzeuges (1), wobei für die Regelung mehrere Regelkreise derart ineinander geschaltet sind, dass ein Führungssignal (sA, sB, sC) eines Reglers (A, B, C) ein Ausgangssignal (uB, uC, uD) des in der Ineinanderschaltung jeweils nächst vorausgehenden Reglers (B, C, D) umfasst, umfassend die folgenden Verfahrensschritte:
• Erhalten eines Handlenkmoments (w) in Form eines Fahrereingriffes (V1), **gekennzeichnet durch** die folgenden Schritte:
• wenigstens Bestimmen eines Fahrer-Lenkwinkelanteils (wA) und eines Fahrer-Gierratenanteils (wB) jeweils in Abhängigkeit des Handlenkmoments (w) (V2) und
• wenigstens Erhalten eines ersten Führungssignals (sA) für einen ersten Regler (A) in Abhängigkeit einer Aufschaltung des Fahrer-Lenkwinkelanteils (wA) auf einen Soll-Lenkwinkel und Erhalten eines zweiten Führungssignals (sB) für einen zweiten Regler (B) in Abhängigkeit einer Aufschaltung des Fahrer-Gierratenanteils (wB) auf eine Soll-Gierrate (V3),
um das Handlenkmoment als ein Führungssignal bei einer Bewegungsregelung zu berücksichtigen.

13. Verfahren nach Anspruch 12, wobei die Soll-Gierrate in Abhängigkeit von mit wenigstens einem Umfelderfassungssensor (DU) wenigstens eines Fahrerassistenzsystems (ADAS) erhaltenen Bewegungsinformationen erhalten wird.

14. Verfahren nach Anspruch 12 oder 13, wobei zur Durchführung des Verfahrens eine Auswerteeinrichtung nach einem der Ansprüche 1 bis 4 oder ein Lenkregelungssystem nach einem der Ansprüche 8 bis 10 verwendet wird.

15. Computerprogrammprodukt (30) zur Berücksichtigung von Fahrereingriffen bei einer Regelung einer Bewegung eines Fahrzeuges (1), wobei das Computerprogrammprodukt (30) ausgeführt ist, in einen Speicher (31) eines Computers (32) geladen zu werden und Softwarecodeabschnitte (33) umfasst, mit denen die Schritte des Verfahrens nach einem der Ansprüche 12 bis 14 ausgeführt werden, wenn das Computerprogrammprodukt (30) auf dem Computer (31) läuft.

## Claims

1. Evaluation device (10) for an inter-connection of at least one first closed-loop control circuit and one second closed-loop control circuit in order to connect an interference signal (w), wherein the inter-connection comprises
• at least one first closed-loop controller (A) for performing closed-loop control of a first control variable (yA) in accordance with a first reference signal (sA) within the first closed-loop control circuit, and
• at least one second closed-loop controller (B) for performing closed-loop control of a second control variable (yB) in accordance with a second reference signal (sB) within the second closed-loop control circuit,
• wherein the first reference signal (sA) of the first closed-loop controller (A) comprises a second output signal (uB) of the second closed-loop controller (B),
comprising
• an input interface (11) for obtaining the interference signal (w),
**characterized in that**
the evaluation device (10) is designed to determine, in accordance with the interference signal (w) at least
∘ one first model reference signal (wA) for the first closed-loop controller (A), and
∘ one second model reference signal (wB) for the second closed-loop controller (B),
and
• at least one output interface (12) for connecting
∘ the first model reference signal (wA) to the first reference signal (sA)
and
∘ the second model reference signal (wB) to the second reference signal (sB),
**in that** the first reference signal (sA) comprises a portion of the interference signal (w) and the second reference signal (sB) comprises a portion of the interference signal (w), in order to take into account the interference signal (w) as a reference signal during closed-loop control of a technical process.

2. Evaluation device (10) according to Claim 1, wherein the evaluation device (10) is designed to determine at least one first model value signal (wV) in accordance with the interference signal (w), in order to connect the first model value signal (wV) to a first output signal (uA) of the first closed-loop controller (A).

3. Evaluation device (10) according to Claim 1 or 2, wherein, in the case of an inter-connection of a plurality of closed-loop controllers (A, B, C, D), in which inter-connection a reference signal (sA, sB, sC) of a closed-loop controller (A, B, C) comprises an output signal (uB, uC, uD) of the closed-loop controller (B, C, D) which is the respectively directly preceding one in the inter-connection, the evaluation device (10) is designed to determine a model reference signal (wA, wB, wC, wD) for each of the closed-loop controllers (A, B, C, D), in order to connect the respective model reference signal (wA, wB, wC, wD) to the reference signal (sA, sB, sC, sD) of the respective closed-loop controller (A, B, C, D).

4. Evaluation device (10) according to one of Claims 1 to 3 for connecting a manual steering torque of a driver (2) of a vehicle (1) to a closed-loop control process of a closed-loop steering control system (20) of the vehicle (1), wherein
• the first closed-loop controller (A) is designed to perform closed-loop control of a setpoint steering angle, wherein the setpoint steering angle is specified by the first reference signal (sA),
• the second closed-loop controller (B) is designed to performed closed-loop control of a setpoint yaw rate, wherein the setpoint yaw rate is specified by the second reference signal (sB), and
• the interference signal (w) comprises the manual steering torque of the driver (2) of the vehicle (1),
wherein the evaluation device (10) is designed
• to determine the first model reference signal (wA) in such a way that the first model reference signal (wA) comprises a driver steering angle component of the manual steering torque, and
• to determine the second model reference signal (wB) in such a way that the second model reference signal (wB) comprises a driver yaw rate component of the manual steering torque,
in order to take into account the manual steering torque as a reference signal during the closed-loop control of the closed-loop steering control system.

5. Inter-connection of a plurality of closed-loop control circuits for connecting an interference signal (w), wherein the inter-connection comprises a plurality of closed-loop controllers (A, B, C, D), wherein during the inter-connection a reference signal (sA, sB, sC) of a closed-loop controller (A, B, C) comprises an output signal (uB, uC, uD) of the closed-loop controller (B, C, D) which is the directly preceding one in the inter-connection, comprising
• at least one first closed-loop controller (A) for performing closed-loop control of a first control variable (yA) in accordance with a first reference signal (sA) within a first closed-loop control circuit, and
• at least one second closed-loop controller (B) for performing closed-loop control of a second control variable (yB) in accordance with a second reference signal (sB) within the second closed-loop control circuit,
wherein the first reference signal (sA) of the first closed-loop controller (A) comprises a second output signal (uB) of the second closed-loop controller (B), and
• an evaluation device (10) according to one of Claims 1 to 4,
in order to take into account the interference signal (w) as a reference signal during closed-loop control of a technical process.

6. Inter-connection according to Claim 5 for performing closed-loop control of a movement of a vehicle (1),
wherein
• the first closed-loop controller (A) is designed to perform closed-loop control of a setpoint steering angle, wherein the setpoint steering angle is specified by the first reference signal (sA),
• the second closed-loop controller (B) is designed to performed closed-loop control of a setpoint yaw rate, wherein the setpoint yaw rate is specified by the second reference signal (sB),
• the interference signal (w) comprises a manual steering torque of a driver (2) of the vehicle (1),
• the first model reference signal (wA) comprises a driver steering angle component of the manual steering torque, and
• the second model reference signal (wB) comprises a driver yaw rate component of the manual steering torque.

7. Inter-connection according to Claim 6, wherein the first model value signal (wV) is an assistant steering torque.

8. Closed-loop steering control system (20) for a vehicle (1), comprising
• a first sensor (DL) for obtaining a manual steering torque of a driver (2) of the vehicle (1) as an interference signal (w),
• a first closed-loop controller (A) for obtaining a first output signal (uA) for performing closed-loop control of a difference between a first control variable (yA) in the form of an actual steering angle and a setpoint steering angle, wherein the setpoint steering angle is specified by a first reference signal (sA) of the first closed-loop controller (A),
• a second sensor (DA) for obtaining the first control variable (yA),
• a second closed-loop controller (B) for obtaining a second output signal (uB) for performing closed-loop control of a difference between a second control variable (yB) in the form of an actual yaw rate (yB) and a setpoint yaw rate, wherein the setpoint yaw rate is specified by a second reference signal (sB) of the second closed-loop controller (B), and wherein the first reference signal (sA) comprises the second output signal (uB),
• a third sensor (DB) for obtaining the second control variable (yB), and
• an evaluation device (10) according to one of Claims 1 to 4,
wherein
∘ the first model reference signal (wA) comprises a driver steering angle component of the manual torque, and
∘ the second model reference signal (wB) comprises a driver yaw rate component of the manual steering torque,
in order to take into account the manual steering torque as a reference signal during a steering process.

9. Closed-loop steering control system (20) according to Claim 8, wherein the closed-loop steering control system (20) comprises at least one driver assistance system (ADAS), wherein the driver assistance system (ADAS) is designed to determine the setpoint yaw rate in accordance with movement information which is obtained with at least one surroundings sensing system (DU) of the driver assistance system (ADAS).

10. Closed-loop steering control system (20) according to Claim 9, wherein the driver assistance system (ADAS) is designed
• to obtain at least one driver steering angle component and the driver yaw rate component, and
• to output these obtained driver components in the form of control signals of a vehicle control device.

11. Vehicle (1) which can be operated in an automated fashion, comprising a closed-loop steering control system (20) according to one of Claims 8 to 10.

12. Method for taking into account driver interventions during closed-loop control of a movement of a vehicle (1), wherein a plurality of closed-loop control circuits are inter-connected for the closed-loop control in such a way that a reference signal (sA, sB, sC) of a closed-loop controller (A, B, C) comprises an output signal (uB, uC, uD) of the closed-loop controller (B, C, D) which is the respectively directly preceding one in the inter-connection, comprising the following method steps:
• obtaining a manual steering torque (w) in the form of a driver intervention (V1), **characterized by** the following steps:
• at least determining a driver steering angle component (wA) and a driver yaw rate component (wB), respectively in accordance with the manual steering torque (w) (V2) and
• at least obtaining a first reference signal (sA) for a first closed-loop controller (A) in accordance with connection of the driver steering angle component (wA) to a setpoint steering angle and obtaining a second reference signal (sB) for a second closed-loop controller (B) in accordance with connection of the driver yaw rate component (wB) to a setpoint yaw rate (V3),
in order to take into account the manual steering torque as a reference signal during control of the movement.

13. Method according to Claim 12, wherein the setpoint yaw rate is obtained in accordance with movement information which is obtained with at least one surrounding sensing system (DU) of at least one driver assistance system (ADAS).

14. Method according to Claim 12 or 13, wherein an evaluation device according to one of Claims 1 to 4 or a closed-loop steering control system according to one of Claims 8 to 10 is used to carry out the method.

15. Computer program product (30) for taking into account driver interventions during closed-loop control of a movement of a vehicle (1), wherein the computer program product (30) is designed to be loaded into a memory (31) of a computer (32), and comprises software code sections (32) with which the steps are carried out according to one of Claims 12 to 14 when the computer program product (30) runs on the computer (31).

## Revendications

1. Dispositif d'interprétation (10) pour une interconnexion d'au moins un premier circuit de régulation et un deuxième circuit de régulation destinée à commuter en superposition un signal perturbateur (w), l'interconnexion comprenant
* au moins un premier régulateur (A) pour réguler une première grandeur de régulation (yA) en fonction d'un premier signal de référence (sA) au sein du premier circuit de régulation, et
* au moins un deuxième régulateur (B) pour réguler une deuxième grandeur de régulation (yB) en fonction d'un deuxième signal de référence (sB) au sein du deuxième circuit de régulation,
* le premier signal de référence (sA) du premier régulateur (A) comprenant un deuxième signal de sortie (uB) du deuxième régulateur (B),
comprenant
* une interface d'entrée (11) destinée à recevoir le signal perturbateur (w),
**caractérisé en ce que** le dispositif d'interprétation (10) est conçu pour, en fonction du signal perturbateur (w), déterminer au moins
∘ un premier signal de référence modèle (wA) pour le premier régulateur (A) et
∘ un deuxième signal de référence modèle (wB) pour le deuxième régulateur (B),
et
* au moins une interface de sortie (12) destinée à commuter en superposition
∘ le premier signal de référence modèle (wA) au premier signal de référence (sA) et
∘ le deuxième signal de référence modèle (wB) au deuxième signal de référence (sB) de telle sorte que le premier signal de référence (sA) comprend une fraction du signal perturbateur (w) et le deuxième signal de référence (sB) une fraction du signal perturbateur (w) afin de tenir compte du signal perturbateur (w) en tant qu'un signal de référence lors d'une régulation d'un processus technique.

2. Dispositif d'interprétation (10) selon la revendication 1, le dispositif d'interprétation (10) étant configuré pour déterminer au moins un premier signal de valeur modèle (wV) en fonction du signal perturbateur (w) afin de commuter en superposition le premier signal de valeur modèle (wV) à un premier signal de sortie (uA) du premier régulateur (A).

3. Dispositif d'interprétation (10) selon la revendication 1 ou 2, le dispositif d'interprétation (10) étant conçu pour, dans le cas d'une interconnexion de plusieurs régulateurs (A, B, C, D) où un signal de référence (sA, sB, sC) d'un régulateur (A, B, C) comprend un signal de sortie (uB, uC, uD) du prochain régulateur (B, C, D) précédent respectif dans l'interconnexion, déterminer pour chacun des régulateurs (A, B, C, D) un signal de référence modèle (wA, wB, wC, wD) afin de commuter en superposition le signal de référence modèle (wA, wB, wC, wD) respectif au signal de référence (sA, sB, sC, sD) du régulateur (A, B, C, D) respectif.

4. Dispositif d'interprétation (10) selon l'une des revendications 1 à 3 destiné à commuter en superposition un couple de braquage manuel d'un conducteur (2) d'un véhicule (1) à une régulation d'un système de régulation de direction (20) du véhicule (1),
* le premier régulateur (A) étant conçu pour réguler un angle de braquage de consigne, l'angle de braquage de consigne étant prédéfini par le premier signal de référence (sA),
* le deuxième régulateur (B) étant conçu pour réguler un taux de lacet de consigne, le taux de lacet de consigne étant prédéfini par le deuxième signal de référence (sB) et
* le signal perturbateur (w) comprenant le couple de braquage manuel du conducteur (2) du véhicule (1),
le dispositif d'interprétation (10) étant conçu pour
* déterminer le premier signal de référence modèle (wA) de telle sorte que le premier signal de référence modèle (wA) comprend une fraction d'angle de braquage de conducteur du couple de braquage manuel et
* déterminer le deuxième signal de référence modèle (wB) de telle sorte que le deuxième signal de référence modèle (wB) comprend une fraction de taux de lacet de conducteur du couple de braquage manuel,
afin de tenir compte du couple de braquage manuel en tant qu'un signal de référence lors de la régulation du système de régulation de direction.

5. Interconnexion de plusieurs circuits de régulation destinée à commuter en superposition un signal perturbateur (w), l'interconnexion comprenant plusieurs régulateurs (A, B, C, D), un signal de référence (sA, sB, sC) d'un régulateur (A, B, C) comprenant, lors de l'interconnexion, un signal de sortie (uB, uC, uD) du prochain régulateur (B, C, D) précédent respectif dans l'interconnexion, comprenant
* au moins un premier régulateur (A) pour réguler une première grandeur de régulation (yA) en fonction d'un premier signal de référence (sA) au sein d'un premier circuit de régulation, et
* au moins un deuxième régulateur (B) pour réguler une deuxième grandeur de régulation (yB) en fonction d'un deuxième signal de référence (sB) au sein du deuxième circuit de régulation,
le premier signal de référence (sA) du premier régulateur (A) comprenant un deuxième signal de sortie (uB) du deuxième régulateur (B),
* un dispositif d'interprétation (10) selon l'une des revendications 1 à 4,
afin de tenir compte du signal perturbateur (w) en tant qu'un signal de référence lors d'une régulation d'un processus technique.

6. Interconnexion selon la revendication 5 destinée à réguler un mouvement d'un véhicule (1),
* le premier régulateur (A) étant conçu pour réguler un angle de braquage de consigne, l'angle de braquage de consigne étant prédéfini par le premier signal de référence (sA),
* le deuxième régulateur (B) étant conçu pour réguler un taux de lacet de consigne, le taux de lacet de consigne étant prédéfini par le deuxième signal de référence (sB),
* le signal perturbateur (w) comprenant un couple de braquage manuel d'un conducteur (2) du véhicule (1),
* le premier signal de référence modèle (wA) comprenant une fraction d'angle de braquage de conducteur du couple de braquage manuel et
* le deuxième signal de référence modèle (wB) comprenant une fraction de taux de lacet de conducteur du couple de braquage manuel.

7. Interconnexion selon la revendication 6, le premier signal de valeur modèle (wV) étant un couple de braquage d'assistance.

8. Système de régulation de direction (20) pour un véhicule (1), comprenant
* un premier capteur (DL) servant à obtenir un couple de braquage manuel d'un conducteur (2) du véhicule (1) en tant que signal perturbateur (w),
* un premier régulateur (A) servant à obtenir un premier signal de sortie (uA) destiné à réguler une différence entre une première grandeur de régulation (yA) sous la forme d'un angle de braquage réel et un angle de braquage de consigne, l'angle de braquage de consigne étant prédéfini par un premier signal de référence (sA) du premier régulateur (A),
* un deuxième capteur (DA) servant à obtenir la première grandeur de régulation (yA),
* un deuxième régulateur (B) servant à obtenir un deuxième signal de sortie (uB) destiné à réguler une différence entre une deuxième grandeur de régulation (yB) sous la forme d'un taux de lacet réel (yB) et un taux de lacet de consigne, le taux de lacet de consigne étant prédéfini par un deuxième signal de référence (sB) du deuxième régulateur (B) et le premier signal de référence (sA) comprenant le deuxième signal de sortie (uB),
* un troisième capteur (DB) servant à obtenir la deuxième grandeur de régulation (yB) et
* un dispositif d'interprétation (10) selon l'une des revendications 1 à 4
o le premier signal de référence modèle (wA) comprenant une fraction d'angle de braquage de conducteur du couple de braquage manuel et
* le deuxième signal de référence modèle (wB) comprenant une fraction de taux de lacet de conducteur du couple de braquage manuel,
afin de tenir compte du couple de braquage manuel en tant qu'un signal de référence lors de la régulation de la direction.

9. Système de régulation de direction (20) selon la revendication 8, le système de régulation de direction (20) comprenant au moins un système d'assistance au conducteur (ADAS), le système d'assistance au conducteur (ADAS) étant conçu pour déterminer le taux de lacet de consigne en fonction d'informations de mouvement obtenues avec au moins un capteur de détection d'environnement (DU) du système d'assistance au conducteur (ADAS).

10. Système de régulation de direction (20) selon la revendication 9, le système d'assistance au conducteur (ADAS) étant conçu pour
* obtenir au moins la fraction d'angle de braquage de conducteur et la fraction de taux de lacet de conducteur et
* indiquer ces fractions de conducteur sous la forme de signaux de commande d'un dispositif de commande de véhicule.

11. Véhicule (1) pouvant fonctionner de manière automatisée, comprenant un système de régulation de direction (20) selon l'une des revendications 8 à 10.

12. Procédé de prise en compte des interventions d'un conducteur lors de la régulation d'un mouvement d'un véhicule (1), plusieurs circuits de régulation étant interconnectés pour la régulation de telle sorte qu'un signal de référence (sA, sB, sC) d'un régulateur (A, B, C) comprend un signal de sortie (uB, uC, uD) du prochain régulateur (B, C, D) précédent respectif dans l'interconnexion, comprenant les étapes de procédé suivantes :
* obtention d'un couple de braquage manuel (w) sous la forme d'une intervention de conducteur (V1), **caractérisé par** les étapes suivantes :
* au moins détermination d'une fraction d'angle de braquage de conducteur (wA) et d'une fraction de taux de lacet de conducteur (wB) respectivement en fonction du couple de braquage manuel (w) (V2) et
* au moins obtention d'un premier signal de référence (sA) pour un premier régulateur (A) en fonction d'une commutation en superposition de la fraction d'angle de braquage de conducteur (wA) sur un angle de braquage de consigne et obtention d'un deuxième signal de référence (sB) pour un deuxième régulateur (B) en fonction d'une commutation en superposition de la fraction de taux de lacet de conducteur (wB) sur un taux de lacet de consigne (V3),
afin de tenir compte du couple de braquage manuel en tant qu'un signal de référence lors de la régulation du mouvement.

13. Procédé selon la revendication 12, le taux de lacet de consigne étant obtenu en fonction d'informations de mouvement obtenues avec au moins un capteur de détection d'environnement (DU) d'au moins un système d'assistance au conducteur (ADAS).

14. Procédé selon la revendication 12 ou 13, un dispositif d'interprétation (10) selon l'une des revendications 1 à 4 ou un système de régulation de direction selon l'une des revendications 8 à 10 étant utilisé pour mettre en œuvre le procédé.

15. Produit de programme informatique (30) destiné à tenir compte des interventions du conducteur lors d'une régulation d'un mouvement d'un véhicule (1), le produit de programme informatique (30) étant conçu pour être chargé dans une mémoire (31) d'un ordinateur (32) et comprenant des portions de code de logiciel (33) avec lesquelles sont mises en œuvre les étapes du procédé selon l'une des revendications 12 à 14 lorsque le produit de programme informatique (30) est exécuté sur l'ordinateur (31).
